(19) Europäisches Patentamt
European Patent Office
Office européen des brevets

(11) **EP 4 487 931 A1**

(12) **EUROPEAN PATENT APPLICATION**

(43) Date of publication:
**08.01.2025 Bulletin 2025/02**

(21) Application number: **24181671.9**

(22) Date of filing: **12.06.2024**

(51) International Patent Classification (IPC):
**A63H 11/00** $^{(2006.01)}$ **G06N 3/008** $^{(2023.01)}$
**B25J 13/00** $^{(2006.01)}$

(52) Cooperative Patent Classification (CPC):
**G06N 3/008; B25J 13/00;** A63H 11/00;
A63H 2200/00; G05B 2219/39162;
G05B 2219/40411

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.07.2023 JP 2023111356**

(71) Applicant: **Casio Computer Co., Ltd.
Tokyo 151-8543 (JP)**

(72) Inventors:
• **Hasegawa, Hirokazu**
  **Hamura-shi, Tokyo, 205-8555 (JP)**
• **Ichikawa, Erina**
  **Hamura-shi, Tokyo, 205-8555 (JP)**
• **Urano, Miyuki**
  **Hamura-shi, Tokyo, 205-8555 (JP)**
• **Mayuzumi, Kouki**
  **Hamura-shi, Tokyo, 205-8555 (JP)**

(74) Representative: **Grünecker Patent- und
Rechtsanwälte
PartG mbB
Leopoldstraße 4
80802 München (DE)**

(54) **ROBOT, ROBOT CONTROL METHOD, AND PROGRAM**

(57) A robot (200) includes a coupler (205) coupling a first part (204) to a second part (206), a driver (220) driving the coupler (205), and a sound outputter (231) that outputs a sound. The robot (200) includes a controller (110) that, upon detection of a predetermined trigger, controls at least one of the driver (220) or the sound outputter (231) so that the robot (200) executes a first action set so that action content changes in accordance with pseudo-growth of the robot (200), and a second action set so that a change of the action content according to the pseudo-growth does not occur and also set so that the action content varies due to a difference in an individuality of the robot (200).

FIG. 1

EP 4 487 931 A1

**Description**

The present application relates generally to a robot, a robot control method, and a program.

Robots that imitate living creatures such as pets are known in the related art. For example, Unexamined Japanese Patent Application Publication No. 2003-285286 describes a robot device that can cause a user to feel a sense of pseudo-growth by acting out a scenario corresponding to a value of a growth parameter.

The robot described in Unexamined Japanese Patent Application Publication No. 2003-285286 can realistically imitate the growth of a living creature by acting out the scenario corresponding to the value of the growth parameter. However, a real living creature, in addition to changing various actions in accordance with growth, has individuality based on congenital factors such as genetics. There is a demand to take such individuality into consideration in order to more realistically imitate living creatures.

The present disclosure is made with the view of the above situation, and an objective of the present disclosure is to provide a robot that can realistically imitate a living creature, a robot control method, and a program.

A robot (200) according to an embodiment of the present disclosure includes:

a coupler (205) coupling a first part (204) to a second part (206);
a driver (220) driving the coupler (205); and
a sound outputter (231) that outputs a sound, wherein
the robot (200) includes a controller (110) that, upon detection of a predetermined trigger, controls at least one of the driver (220) or the sound outputter (231) so that the robot (200) executes a first action set so that action content changes in accordance with pseudo-growth of the robot (200), and a second action set so that a change of the action content according to the pseudo-growth does not occur and also set so that the action content varies due to a difference in an individuality of the robot (200).

A robot control method according to an embodiment of the present disclosure is a control method for a robot (200) including a coupler (205) coupling a first part (204) to a second part(206), a driver (220) driving the coupler (205), and a sound outputter (231) that outputs a sound, the method including:

a detection step of detecting a predetermined trigger (S102); and
a control step of, upon detection of the predetermined trigger in the detection step, controlling at least one of the driver (220) or the sound outputter (231) so that the robot (200) executes a first action set so that action content changes in accordance with pseudo-growth of the robot (200), and a second action set so that a change of the action content according to the pseudo-growth does not occur and also set so that the action content varies due to a difference in an individuality of the robot (200) (S106).

A program according to an embodiment of the present disclosure causes a computer of a robot (200) including a coupler (205) coupling a first part (204) to a second part(206), a driver (220) driving the coupler (205), and a sound outputter (231) that outputs a sound to function as:

detection means that detects a predetermined trigger; and
control means that, upon detection of the predetermined trigger, controls at least one of the driver (220) or the sound outputter (231) so that the robot (200) executes a first action set so that action content changes in accordance with pseudo-growth of the robot (200), and a second action set so that a change of the action content according to the pseudo-growth does not occur and also set so that the action content varies due to a difference in an individuality of the robot (200).

According to the present disclosure it is possible to provide a robot that can realistically imitate a living creature, a robot control method, and a program.

A more complete understanding of this application can be obtained when the following detailed description is considered in conjunction with the following drawings, in which:

FIG. 1 is a drawing illustrating the appearance of a robot according to an embodiment;
FIG. 2 is a cross-sectional view of the robot according to the embodiment, viewed from the side;
FIG. 3 is a drawing illustrating a housing of the robot according to the embodiment;
FIG. 4 is a first drawing illustrating a movement of a twist motor of the robot according to the embodiment;
FIG. 5 is a second drawing illustrating a movement of the twist motor of the robot according to the embodiment;
FIG. 6 is a first drawing illustrating a movement of a vertical motor of the robot according to the embodiment;
FIG. 7 is a second drawing illustrating a movement of the vertical motor of the robot according to the embodiment;

FIG. 8 is a block diagram illustrating the configuration of the robot according to the embodiment;

FIG. 9 is a drawing illustrating an example of an emotion map according to the embodiment;

FIG. 10 is a drawing illustrating an example of a personality value radar chart according to the embodiment;

FIG. 11 is a drawing illustrating an example of a growth table according to the embodiment;

FIG. 12 is a drawing illustrating an example of an action content table according to the embodiment;

FIG. 13 is a drawing illustrating an example of a motion table according to the embodiment;

FIG. 14 is a drawing illustrating an example of an individuality table according to the embodiment;

FIG. 15 is a drawing illustrating period-based differences of actions executed by the robot according to the embodiment;

FIG. 16 is a flowchart illustrating the flow of robot control processing according to the embodiment; and

FIG. 17 is a flowchart illustrating the flow of action control processing according to the embodiment.

Hereinafter, embodiments of the present disclosure are described while referencing the drawings. Note that, in the drawings, identical or corresponding components are denoted with the same reference numerals.

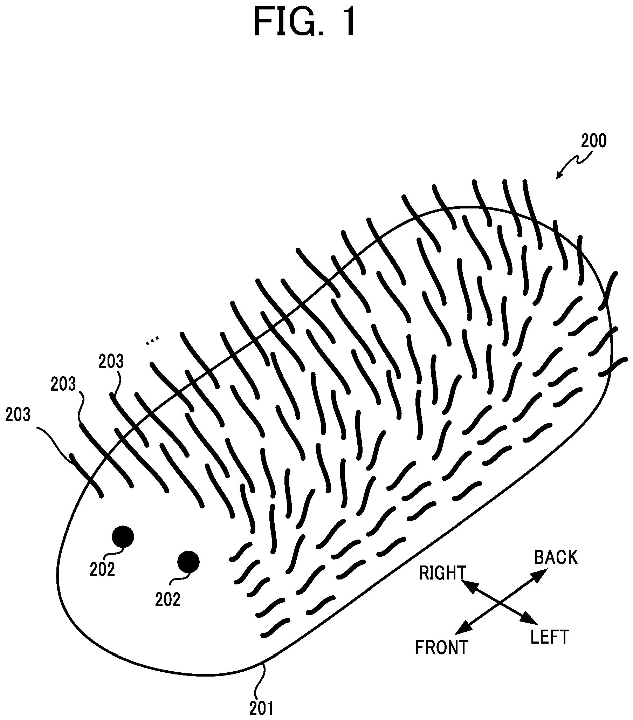

FIGS. 1 to 3 illustrate the appearance of a robot 200 according to the present embodiment. The robot 200 is a device that autonomously acts without direct operations by a user. As illustrated in FIG. 1, the robot 200 is a pet robot that resembles a small animal. The robot 200 includes an exterior 201 provided with bushy fur 203 and decorative parts 202 resembling eyes.

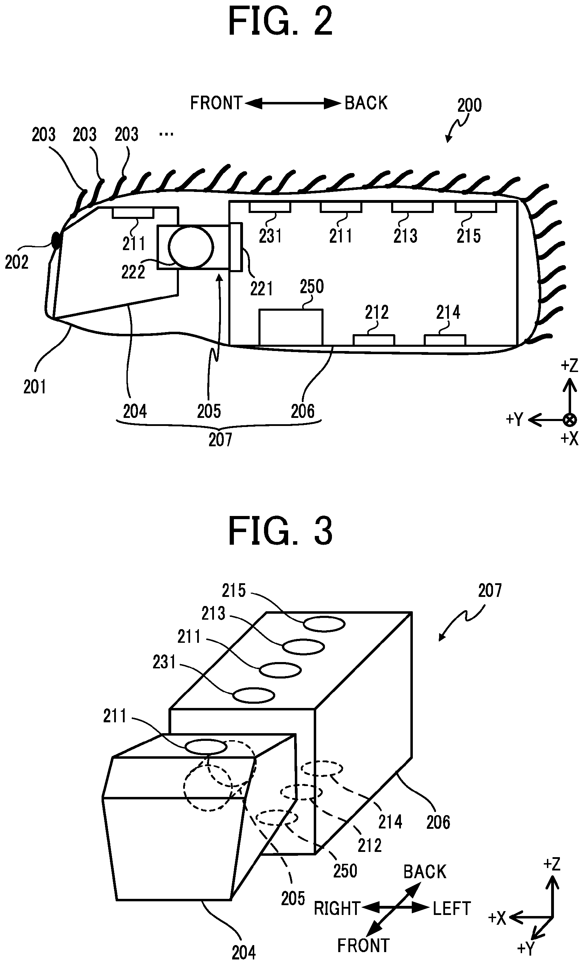

As illustrated in FIGS. 2 and 3, the robot 200 includes a housing 207. The housing 207 is covered by the exterior 201, and is accommodated inside the exterior 201. The housing 207 includes a head 204 as a first part, a coupler 205, and a torso 206 as a second part. The coupler 205 couples the head 204 to the torso 206.

The exterior 201 is an example of an exterior member, and has the shape of a bag that is long in a front-back direction and capable of accommodating the housing 207 therein. The exterior 201 is formed in a barrel shape from the head 204 to the torso 206, and integrally covers the torso 206 and the head 204. Due to the exterior 201 having such a shape, the robot 200 is formed in a shape as if lying on its belly.

An outer material of the exterior 201 simulates the feel to touch of a small animal, and is formed from an artificial pile fabric that resembles the fur 203 of a small animal. A lining of the exterior 201 is formed from synthetic fibers, natural fibers, natural leather, artificial leather, a synthetic resin sheet material, a rubber sheet material, or the like. The exterior 201 is formed from such a flexible material and, as such, conforms to the movement of the housing 207. Specifically, the exterior 201 conforms to the rotation of the head 204 relative to the torso 206.

In order to configure so that the exterior 201 conforms to the movement of the housing 207, the exterior 201 is attached to the housing 207 by non-illustrated snap buttons. Specifically, at least one snap button is provided at the front of the head 204, and at least one snap button is provided at the rear of the torso 206. Moreover, snap buttons, that engage with the snap buttons provided on the head 204 and the torso 206, are also provided at corresponding positions of the exterior 201, and the exterior 201 is fixed to the housing 207 by the snap buttons. Note that the numbers and positions of the snap buttons are merely examples, and can be changed as desired.

The torso 206 extends in the front-back direction, and contacts, via the exterior 201, a placement surface such as a floor, a table, or the like on which the robot 200 is placed. The torso 206 includes a twist motor 221 at a front end thereof. The head 204 is coupled to the front end of the torso 206 via the coupler 205. The coupler 205 includes a vertical motor 222. Note that, in FIG. 2, the twist motor 221 is provided on the torso 206, but may be provided on the coupler 205. Due to the twist motor 221 and the vertical motor 222, the head 204 is coupled to the torso 206 so as to be rotatable, around a left-right direction and the front-back direction of the robot 200, with respect to the torso 206.

Note that, as XYZ coordinate axes, an X axis and a Y axis are set in the horizontal plane, and a Z axis is set in the vertical direction. The + direction of the Z axis corresponds to vertically upward. Moreover, to facilitate comprehension, in the following, a description is given in which the robot 200 is placed on the placement surface and oriented such that the left-right direction (the width direction) of the robot 200 is the X axis direction and the front-back direction of the robot 200 is the Y axis direction.

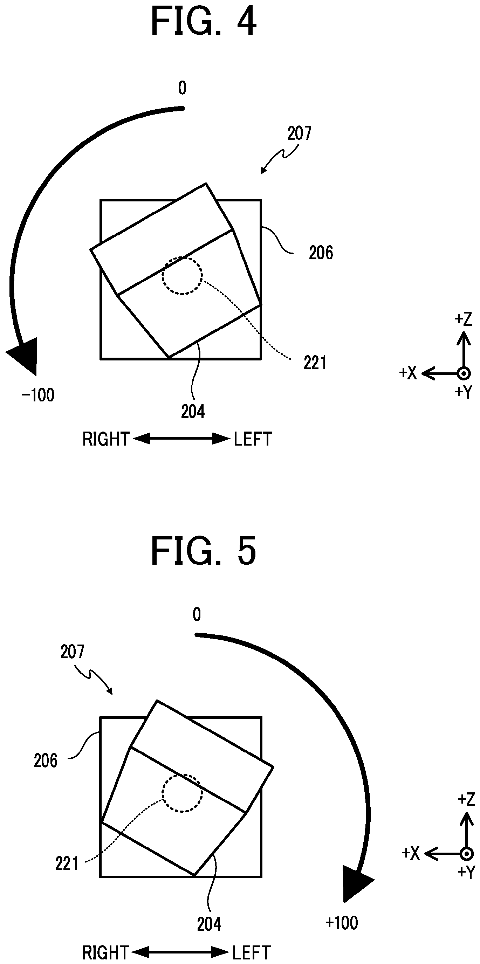

The coupler 205 couples the torso 206 and the head 204 so as to enable rotation around a first rotational axis that passes through the coupler 205 and extends in the front-back direction (the Y direction) of the torso 206. As illustrated in FIGS. 4 and 5, the twist motor 221 rotates the head 204, with respect to the torso 206, clockwise (right rotation) within a forward rotation angle range around the first rotational axis (forward rotation), counter-clockwise (left rotation) within a reverse rotation angle range around the first rotational axis (reverse rotation), and the like.

Note that, in this description, the term "clockwise" refers to clockwise when viewing the direction of the head 204 from the torso 206. Additionally, herein, clockwise rotation is also referred to as "twist rotation to the right", and counter-clockwise rotation is also referred to as "twist rotation to the left." A maximum value of an angle of twist rotation to the right or the left can be set as desired. In FIGS. 4 and 5, the angle of the head 204 in a state in which the head 204 is not twisted to the right or the left (hereinafter, "twist reference angle") is expressed by 0. An angle when twist rotated most to the left (rotated counter-clockwise) is expressed as -100, and an angle when twist rotated most to the right (rotated clockwise) is expressed as +100.

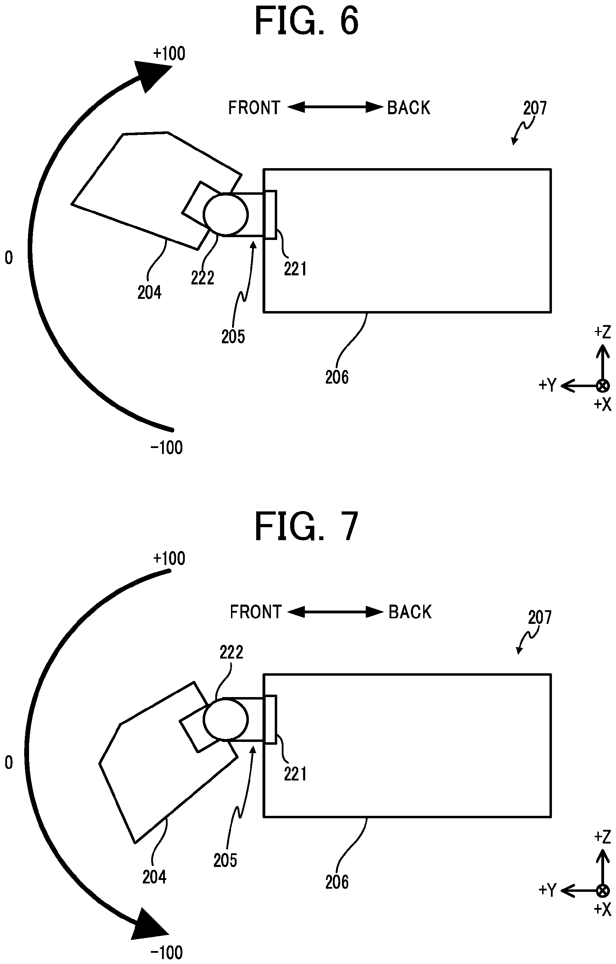

Additionally, the coupler 205 couples the torso 206 and the head 204 so as to enable rotation around a second rotational axis that passes through the coupler 205 and extends in the left-right direction (the width direction, the X direction) of the torso 206. As illustrated in FIGS. 6 and 7, the vertical motor 222 rotates the head 204 upward (forward rotation) within a forward rotation angle range around the second rotational axis, downward (reverse rotation) within a reverse rotation angle range around the second rotational axis, and the like.

A maximum value of the angle of rotation upward or downward can be set as desired, and, in FIGS. 6 and 7, the angle of the head 204 in a state in which the head 204 is not rotated upward or downward (hereinafter, "vertical reference angle") is expressed by 0, an angle when rotated most downward is expressed as -100, and an angle when rotated most upward is expressed as +100.

As illustrated in FIGS. 2 and 3, the robot 200 includes a touch sensor 211 on the head 204 and the torso 206. The robot 200 can detect, by the touch sensor 211, petting or striking of the head 204 or the torso 206 by the user.

The robot 200 includes, on the torso 206, an acceleration sensor 212, a microphone 213, a gyrosensor 214, an illuminance sensor 215, and a speaker 231. By using the acceleration sensor 212 and the gyrosensor 214, the robot 200 can detect a change of an attitude of the robot 200 itself, and can detect being picked up, the orientation being changed, being thrown, and the like by the user. The robot 200 can detect the ambient illuminance of the robot 200 by using the illuminance sensor 215. The robot 200 can detect external sounds by using the microphone 213. The robot 200 can emit sounds by using the speaker 231.

Note that, at least a portion of the acceleration sensor 212, the microphone 213, the gyrosensor 214, the illuminance sensor 215, and the speaker 231 is not limited to being provided on the torso 206 and may be provided on the head 204, or may be provided on both the torso 206 and the head 204.

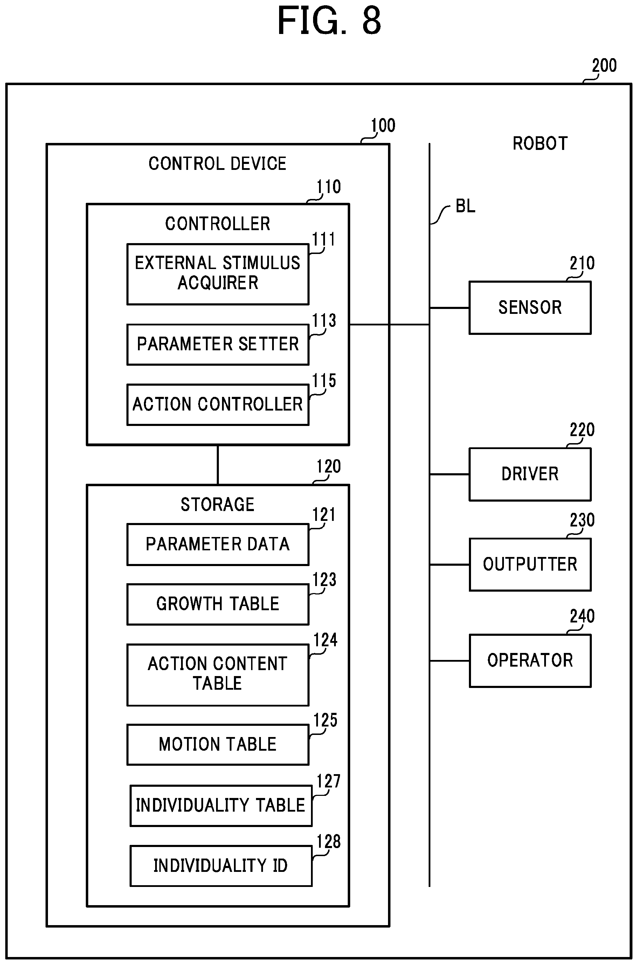

Next, the functional configuration of the robot 200 is described while referencing FIG. 8. As illustrated in FIG. 8, the robot 200 includes a control device 100, a sensor 210, a driver 220, an outputter 230, and an operator 240. In one example, these various components are connected via a bus line BL. Note that a configuration is possible in which, instead of the bus line BL, a wired interface such as a universal serial bus (USB) cable or the like, or a wireless interface such as Bluetooth (registered trademark) or the like is used.

The control device 100 includes a controller 110 and a storage 120. The control device 100 controls the actions of the robot 200 by the controller 110 and the storage 120.

The controller 110 includes a central processing unit (CPU). In one example, the CPU is a microprocessor or the like and is a central processing unit that executes a variety of processing and computations. In the controller 110, the CPU reads out a control program stored in the ROM and controls the behavior of the entire robot 200 while using the RAM as working memory. Additionally, while not illustrated in the drawings, the controller 110 is provided with a clock function, a timer function, and the like, and can measure the date and time, and the like. The controller 110 may also be called a "processor."

The storage 120 includes read-only memory (ROM), random access memory (RAM), flash memory, and the like. The storage 120 stores an operating system (OS), application programs, and other programs and data used by the controller 110 to perform the various processes. Moreover, the storage unit 120 stores data generated or acquired as a result of the controller 110 performing the various processes.

The sensor 210 includes the touch sensor 211, the acceleration sensor 212, the gyrosensor 214, the illuminance sensor 215, and the microphone 213 described above. The controller 110 acquires, via the bus line BL and as an external stimulus, detection values detected by the various sensors of the sensor 210. Note that a configuration is possible in which the sensor 210 includes sensors other than the touch sensor 211, the acceleration sensor 212, the gyrosensor 214, and the microphone 213. The types of external stimuli acquirable by the controller 110 can be increased by increasing the types of sensors of the sensor 210.

The touch sensor 211 includes, for example, a pressure sensor and a capacitance sensor, and detects contacting by some sort of object. The controller 110 can, on the basis of detection values of the touch sensor 211, detect that the robot 200 is being pet, is being struck, and the like by the user.

The acceleration sensor 212 detects an acceleration applied to the torso 206 of the robot 200. The acceleration sensor 212 detects acceleration in each of the X axis direction, the Y axis direction, and the Z axis direction. That is, the acceleration sensor 212 detects acceleration on three axes.

In one example, the acceleration sensor 212 detects gravitational acceleration when the robot 200 is stationary. The controller 110 can detect the current attitude of the robot 200 on the basis of the gravitational acceleration detected by the acceleration sensor 212. In other words, the controller 110 can detect whether the housing 207 of the robot 200 is inclined from the horizontal direction on the basis of the gravitational acceleration detected by the acceleration sensor 212. Thus, the acceleration sensor 212 functions as incline detection means that detects the inclination of the robot 200.

Additionally, when the user picks up or throws the robot 200, the acceleration sensor 212 detects, in addition to the gravitational acceleration, acceleration caused by the movement of the robot 200. Accordingly, the controller 110 can detect the movement of the robot 200 by removing the gravitational acceleration component from the detection value detected by the acceleration sensor 212.

The gyrosensor 214 detects an angular velocity from when rotation is applied to the torso 206 of the robot 200. Specifically, the gyrosensor 214 detects the angular velocity on three axes of rotation, namely rotation around the X axis direction, rotation around the Y axis direction, and rotation around the Z axis direction. It is possible to more accurately detect the movement of the robot 200 by combining the detection value detected by the acceleration sensor 212 and the detection value detected by the gyrosensor 214.

Note that, at a synchronized timing (for example every 0.25 seconds), the touch sensor 211, the acceleration sensor 212, and the gyrosensor 214 respectively detect the strength of contact, the acceleration, and the angular velocity, and output the detection values to the controller 110.

The microphone 213 detects ambient sound of the robot 200. The controller 110 can, for example, detect, on the basis of a component of the sound detected by the microphone 213, that the user is speaking to the robot 200, that the user is clapping their hands, and the like.

The illuminance sensor 215 detects the illuminance of the surroundings of the robot 200. The controller 110 can detect that the surroundings of the robot 200 have become brighter or darker on the basis of the illuminance detected by the illuminance sensor 215.

The driver 220 includes the twist motor 221 and the vertical motor 222, and is driven by the controller 110. The twist motor 221 is a servo motor for rotating the head 204, with respect to the torso 206, in the left-right direction (the width direction) with the front-back direction as an axis. The vertical motor 222 is a servo motor for rotating the head 204, with respect to the torso 206, in the up-down direction (height direction) with the left-right direction as an axis. The robot 200 can express actions of turning the head 204 to the side by using the twist motor 221, and can express actions of lifting/lowering the head 204 by using the vertical motor 222.

The outputter 230 includes the speaker 231, and sound is output from the speaker 231 as a result of sound data being input into the outputter 230 by the controller 110. For example, the robot 200 emits a pseudo-animal sound as a result of the controller 110 inputting animal sound data of the robot 200 into the outputter 230.

A configuration is possible in which, instead of the speaker 231, or in addition to the speaker 231, a display such as a liquid crystal display, a light emitter such as a light emitting diode (LED), or the like is provided as the outputter 230, and emotions such as joy, sadness, and the like are displayed on the display, expressed by the color and brightness of the emitted light, or the like.

The operator 240 includes an operation button, a volume knob, or the like. In one example, the operator 240 is an interface for receiving user operations such as turning the power ON/OFF, adjusting the volume of the output sound, and the like.

Next, the functional configuration of the controller 110 is described. As illustrated in FIG. 8, the controller 110 functionally includes an external stimulus acquirer 111 that is an example of external stimulus acquisition means, a parameter setter 113 that is an example of parameter setting means, and an action controller 115 that is an example of action control means. In the controller 110, the CPU performs control and reads the program stored in the ROM out to the RAM and executes that program, thereby functioning as the various components described above.

The storage 120 stores parameter data 121, a growth table 123, an action content table 124, a motion table 125, an individuality table 127, and an individuality ID 128.

The external stimulus acquirer 111 acquires an external stimulus. The external stimulus is a stimulus that acts on the robot 200 from outside the robot 200. Examples of the external stimulus include "there is a loud sound", "spoken to", "petted", "picked up", "turned upside down", "became brighter", "became darker", and the like. In the following, the external stimuli are also referred to as "events."

The external stimulus acquirer 111 acquires the external stimulus on the basis of detection values from the sensor 210. More specifically, the external stimulus acquirer 111 acquires a plurality of external stimuli of mutually different types by the plurality of sensors (the touch sensor 211, the acceleration sensor 212, the microphone 213, the gyrosensor 214, and the illuminance sensor 215) of the sensor 210.

In one example, the external stimulus acquirer 111 acquires the external stimulus of "there is a loud sound" or "spoken to" by the microphone 213. The external stimulus acquirer 111 acquires the external stimulus of "petted" by the touch sensor 211. The external stimulus acquirer 111 acquires the external stimulus of "picked up", or "turned upside down" by the acceleration sensor 212 and the gyrosensor 214. The external stimulus acquirer 111 acquires the external stimulus of "became brighter" or "became darker" by the illuminance sensor 215.

The parameter setter 113 sets the parameter data 121. The parameter data 121 is data that determines various types of parameters related to the robot 200. Specifically, the parameter data 121 includes: (1) a growth days count, (2) an emotion parameter, (3) an emotion change amount, (4) a personality parameter, and (5) a growth parameter.

(1) Growth days count

The growth days count is the number of days of pseudo-growth of the robot 200, and represents an age-like growth state. The robot 200 is pseudo-born at the time of first start up by the user after shipping from the factory, and grows from a juvenile to an adult over a predetermined growth period. The growth days count corresponds to the number of days since the pseudo-birth of the robot 200.

An initial value of the growth days count is 1, and the parameter setter 113 adds 1 to the growth days count for each passing day. In one example, the growth period in which the robot 200 grows from a juvenile to an adult is 50 days, and the 50-day period that is the growth days count since the pseudo-birth is referred to as a "first period (juvenile period)." When the first period elapses, the pseudo-growth of the robot 200 ends. A period after the first period elapses is called a "second period (adult period)."

(2) Emotion parameter

The parameter setter 113 sets the emotion parameter. The emotion parameter is a parameter that represents a pseudo-emotion of the robot 200. The emotion parameter is expressed by coordinates (X, Y) on an emotion map 300.

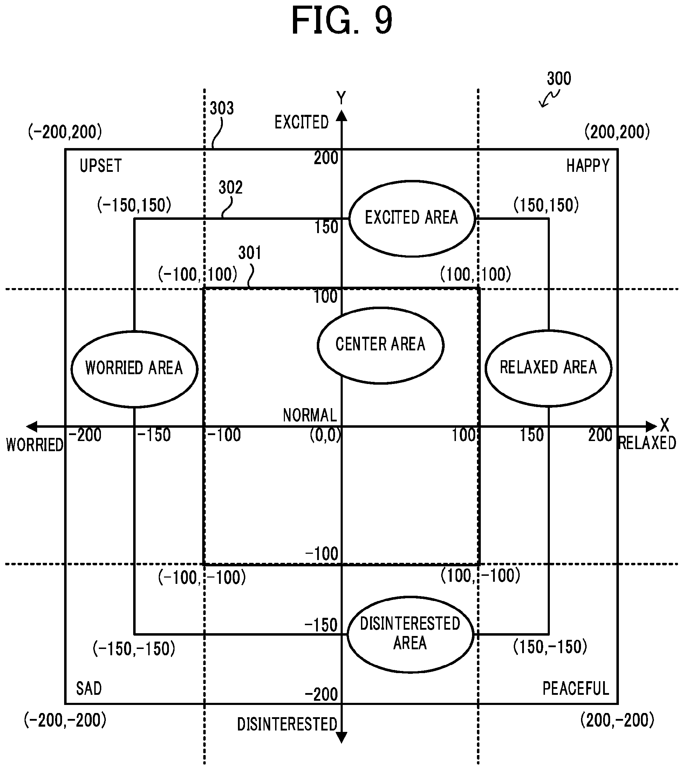

As illustrated in FIG. 9, the emotion map 300 is expressed by a two-dimensional coordinate system with a degree of relaxation (degree of worry) axis as an X axis, and a degree of excitement (degree of disinterest) axis as a Y axis. An origin (0, 0) on the emotion map 300 represents an emotion when normal. As the value of the X coordinate (X value) is positive and the absolute value thereof increases, emotions for which the degree of relaxation is high are expressed and, as the value of the X coordinate (X value) is negative and the absolute value thereof increases, emotions for which the degree of worry is high are expressed. As the value of the Y coordinate (Y value) is positive and the absolute value thereof increases, emotions for which the degree of excitement is high are expressed and, as the value of the Y coordinate (Y value) is negative and the absolute value thereof increases, emotions for which the degree of disinterest is high are expressed.

The emotion parameter represents a plurality (in the present embodiment, four) of mutually different pseudo-emotions. In FIG. 9, of the values representing pseudo-emotions, the degree of relaxation and the degree of worry are represented together on one axis (X axis), and the degree of excitement and the degree of disinterest are represented together on another axis (Y axis). Accordingly, the emotion parameter has two values, namely the X value (degree of relaxation, degree of worry) and the Y value (degree of excitement, degree of disinterest), and points on the emotion map 300 represented by the X value and the Y value represent the pseudo-emotions of the robot 200. An initial value of the emotion parameter is (0, 0).

Note that, in FIG. 9, the emotion map 300 is expressed as a two-dimensional coordinate system, but the number of dimensions of the emotion map 300 may be set as desired. A configuration is possible in which the emotion map 300 is defined by one dimension, and one value is set as the emotion parameter. Additionally, a configuration is possible in which another axis is added and the emotion map 300 is defined by three or more dimensions, and a number of values corresponding to the number of dimensions of the emotion map 300 are set as the emotion parameter.

Regarding an initial value of the size of the emotion map 300, as illustrated by a frame 301 of FIG. 9, a maximum value of both the X value and the Y value is 100 and a minimum value is -100. During the first period (for example, 50-days) that is the growth period of the robot 200, each time the pseudo growth days count of the robot 200 increases one day, the parameter setter 113 increases the maximum value and the minimum value of the emotion map 300 both by two.

When the growth days count exceeds half of the first period (for example, 25 days), as illustrated by a frame 302 of FIG. 9, the maximum value of the X value and the Y value is 150 and the minimum value is -150. Moreover, when the first period (for example, 50 days) elapses, the pseudo-growth of the robot 200 stops. At this time, as illustrated by a frame 303 of FIG. 9, the maximum value of the X value and the Y value is 200 and the minimum value is -200. Thereafter, the size of the emotion map 300 is fixed.

A settable range of the emotion parameter is defined by the emotion map 300. Thus, as the size of the emotion map 300 expands, the settable range of the emotion parameter expands Due to the settable range of the emotion parameter expanding, richer emotion expression becomes possible and, as such, the pseudo-growth of the robot 200 is expressed by the expanding of the size of the emotion map 300.

Note that the stopping condition for the pseudo-growth of the robot 200 is not limited to "the first period elapses", and another condition may be added. For example, a configuration is possible in which the stopping condition of the growth is set to "any of four personality values reaches a maximum value (for example, 10)." When the growth is stopped on the basis of this condition, the personality is fixed at the point in time at which only one of the four personality values reaches the maximum value, thereby making it possible to strongly express a specific personality.

(3) Emotion change amount

The emotion change amount is data expressing degrees to which the pseudo-emotions of the robot 200 are changed, and defines an amount of change that each of the X value and the Y value of the emotion parameter is increased or decreased. The emotion change amount is expressed by the following four variables: DXP and DXM respectively increase and decrease the X value of the emotion parameter. DYP and DYM respectively increase and decrease the Y value of the emotion parameter.

DXP: Tendency to relax (tendency to change in the positive value direction of the X value on the emotion map)
DXM: Tendency to worry (tendency to change in the negative value direction of the X value on the emotion map)
DYP: Tendency to be excited (tendency to change in the positive value direction of the Y value on the emotion map)
DYM: Tendency to be disinterested (tendency to change in the negative value direction of the Y value on the emotion map)

The initial value of these emotion change amounts DXP, DXM, DYP, and DYM is 10, and these various values are updated by learning, described later. The parameter setter 113 updates the emotion parameter by adding or subtracting a value, among the emotion change amounts DXP, DXM, DYP, and DYM, corresponding to the external stimulus to or from the current emotion parameter.

For example, when the head 204 is petted, the pseudo-emotion of the robot 200 is relaxed and, as such, the parameter setter 113 adds the DXP to the X value of the emotion parameter. Conversely, when the head 204 is struck, the pseudo-emotion of the robot 200 is worried and, as such, the parameter setter 113 subtracts the DXM from the X value of the emotion parameter. Which emotion change amount is associated with the various external stimuli can be set as desired. An example is given below.

The head 204 is petted (relax): X = X+DXP
The head 204 is struck (worry): X = X-DXM
(these external stimuli can be detected by the touch sensor 211 of the head 204)
The torso 206 is petted (excite): Y = Y+DYP
The torso 206 is struck (disinterest): Y = Y-DYM
(these external stimuli can be detected by the touch sensor 211 of the torso 206)
Held with head upward (happy): X = X+DXP and Y = Y+DYP
Suspended with head downward (sad): X = X-DXM and Y = Y-DYM
(these external stimuli can be detected by the touch sensor 211 and the acceleration sensor 212)
Spoken to in kind voice (peaceful): X = X+DXP and Y = Y-DYM
Yelled at in loud voice (upset): X = X-DXM and Y = Y+DYP
(these external stimuli can be detected by the microphone 213)

The external stimulus acquirer 111 acquires a plurality of external stimuli of mutually different types by the plurality of sensors of the sensor 210. As such, the parameter setter 113 derives various emotion change amounts in accordance with each individual external stimulus of the plurality of external stimuli, and sets the emotion parameter in accordance with the derived emotion change amounts.

Note that the maximum value and the minimum value of the X value and the Y value of the emotion parameter are defined by the size of the emotion map 300. As such, when, due to the operations described above, a value exceeds the maximum value of the emotion map 300, that value is set to the maximum value, and when a value is lower than the minimum value of the emotion map 300, that value is set to the maximum value.

The parameter setter 113 updates the various variables, namely the emotion change amounts DXP, DXM, DYP, and DYM in accordance with the external stimuli acquired by the external stimulus acquirer 111. Specifically, when the X value of the emotion parameter is set to the maximum value of the emotion map 300 even once in one day, the parameter setter 113 adds 1 to the DXP, and when the Y value of the emotion parameter is set to the maximum value of the emotion map 300 even once in one day, the parameter setter 113 adds 1 to the DYP. Additionally, when the X value of the emotion parameter is set to the minimum value of the emotion map 300 even once in one day, the parameter setter 113 adds 1 to the DXM, and when the Y value of the emotion parameter is set to the minimum value of the emotion map 300 even once in one day, the parameter setter 113 adds 1 to the DYM.

Thus, the parameter setter 113 changes the emotion change amounts in accordance with a condition (first condition based on external stimulus) based on whether the value of the emotion parameter reaches the maximum value or the minimum value of the emotion map 300. The updating of these various variables is called learning of the emotion change amounts. As an example, assume that all of the initial values of the various variables of the emotion change amount are set to 10. The parameter setter 113 increases the various variables to a maximum of 20 by the updating (learning) described above. Due to this learning processing, each emotion change amount, that is, the degree of change of emotion, changes.

For example, when only the head 204 is petted multiple times, only the emotion change amount DXP increases and the other emotion change amounts do not change. As such, the robot 200 develops a personality of having a tendency to be relaxed. When only the head 204 is struck multiple times, only emotion change amount DXM increases and the other emotion change amounts do not change. As such the robot 200 develops a personality of having a tendency to be worried. Thus, the parameter setter 113 changes the emotion change amounts in accordance with various external stimuli. That is, the parameter setter 113 updates, in accordance with the detected external stimuli, the parameters for determining the pseudo-personality.

The value added to the various emotion change amount variables is not limited to 1. For example, a configuration is possible in which a number of times at which each value of the emotion parameters is set to the maximum value or the minimum value of the emotion map 300 is counted and, when that number of times is great, the numerical value to be added to the emotion change amount is increased. Moreover, the condition for learning the emotion change amounts is not limited to that described above. For example, a configuration is possible in which the emotion change amounts are learned when the X value or the Y value of the emotion parameter reaches a predetermined value (for example, a value 0.5-times the maximum value or a value 0.5-times the minimum value of the emotion map 300) even once. Additionally, the period is not limited to a period of one-day, and a configuration is possible in which the emotion change amounts are learned when the X value or the Y value of the emotion parameter reaches the predetermined value in another period such as a half-day or one week. Moreover, a configuration is possible in which the emotion change amounts are learned when the X value or the Y value of the emotion parameter reaches the predetermined value even once in a period up to when a number of acquisitions of the external stimulus reaches a predetermined count (for example, 50), instead of in a certain period such as one-day or the like.

(4) Personality parameter

The personality parameter is a parameter expressing the pseudo-personality of the robot 200. The personality parameter includes a plurality of personality values that express degrees of mutually different personalities. The parameter setter 113 changes the plurality of personality values included in the personality parameter in accordance with external stimuli acquired by the external stimulus acquirer 111.

Specifically, the parameter setter 113 calculates four personality values on the basis of (Equation 1) below. Specifically, a value obtained by subtracting 10 from DXP that expresses a tendency to be relaxed is set as a personality value (chipper), a value obtained by subtracting 10 from DXM that expresses a tendency to be worried is set as a personality value (shy), a value obtained by subtracting 10 from DYP that expresses a tendency to be excited is set as a personality value (active), and a value obtained by subtracting 10 from DYM that expresses a tendency to be disinterested is set as a personality value (spoiled).

$$\text{Personality value (chipper)} = DXP\text{-}10$$
$$\text{Personality value (shy)} = DXM\text{-}10$$
$$\text{Personality value (active)} = DYP\text{-}10$$
$$\text{Personality value (spoiled)} = DYM\text{-}10$$
$$(\text{Equation 1})$$

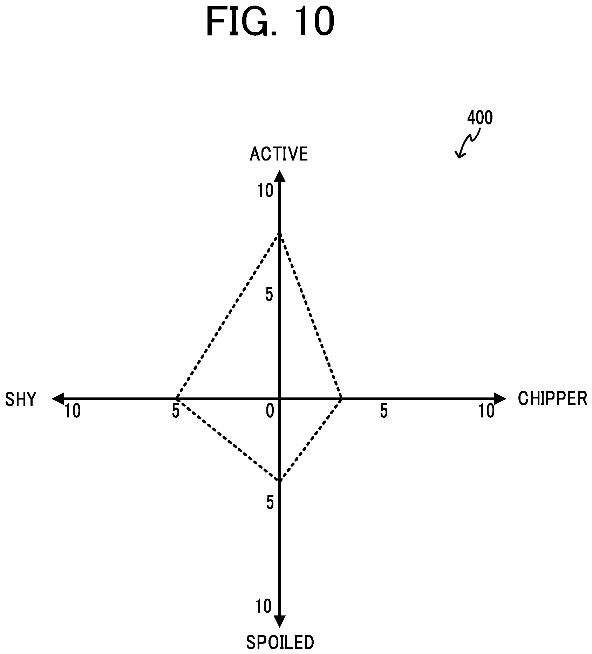

As a result, as illustrated in FIG. 10, it is possible to generate a personality value radar chart 400 by plotting each of the personality value (chipper) on a first axis, the personality value (active) on a second axis, the personality value (shy) on a third axis, and the personality value (spoiled) on fourth axis. Since the various emotion change amount variables each have an initial value of 10 and increase up to 20, the range of the personality value is from 0 to 10.

Since the initial value of each of the personality values is 0, the personality at the time of birth of the robot 200 is expressed by the origin of the personality value radar chart 400. Moreover, as the robot 200 grows, the four personality values change, with an upper limit of 10, due to external stimuli and the like (manner in which the user interacts with the robot 200) detected by the sensor 210. Therefore, 11 to the power of 4 = 14,641 types of personalities can be expressed.

Thus, the robot 200 assumes various personalities in accordance with the manner in which the user interacts with the robot 200. That is, the personality of each individual robot 200 is formed differently on the basis of the manner in which the user interacts with the robot 200.

These four personality values are fixed when the first period elapses and the pseudo-growth of the robot 200 is complete. In the subsequent second period, the parameter setter 113 adjusts four personality correction values (chipper correction value, active correction value, shy correction value, and spoiled correction value) in order to correct the personality in accordance with the manner in which the user interacts with the robot 200.

The parameter setter 113 adjusts the four personality correction values in accordance with a condition based on where the area in which the emotion parameter has existed the longest is located on the emotion map 300 (second condition based on external stimulus data). Specifically, the four personality correction values are adjusted as in (A) to (E) below.

(A) When the longest existing area is the relaxed area on the emotion map 300, the parameter setter 113 adds 1 to the chipper correction value and subtracts 1 from the shy correction value.

(B) When the longest existing area is the excited area on the emotion map 300, the parameter setter 113 adds 1 to the active correction value and subtracts 1 from the spoiled correction value.

(C) When the longest existing area is the worried area on the emotion map 300, the parameter setter 113 adds 1 to the shy correction value and subtracts 1 from the chipper correction value.

(D) When the longest existing area is the disinterested area on the emotion map 300, the parameter setter 113 adds 1 to the spoiled correction value and subtracts 1 from the active correction value.

(E) When the longest existing area is the center area on the emotion map 300, the parameter setter 113 reduces the absolute value of all four of the personality correction values by 1.

When setting the four personality correction values, the parameter setter 113 calculates the four personality values in accordance with (Equation 2) below.

$$\text{Personality value (chipper)} = \text{DXP-10+chipper correction value}$$

$$\text{Personality value (shy)} = \text{DXM-10+shy correction value}$$

$$\text{Personality value (active)} = \text{DYP-10+active correction value}$$

$$\text{Personality value (spoiled)} = \text{DYM-10+spoiled correction value}$$

$$(\text{Equation 2})$$

(5) Growth parameter

The growth parameter is a value expressing the degree of pseudo-growth of the robot 200 and, specifically, expresses a degree of development as a growth state of the personality. The parameter setter 113 sets the growth parameter on the basis of the personality parameter. Specifically, the parameter setter 113 sets the growth parameter to the largest value among the plurality of personality values (four in the example described above) included in the personality parameter. For example, in the example illustrated in FIG. 10, the personality value (chipper) is 3, the personality value (active) is 8, the personality value (shy) is 5, and the personality value (spoiled) is 4. As such, the parameter setter 113 sets the value 8 of the personality value (active), that is the maximum value among the personality values, as the growth parameter. Note that the growth parameter is not limited to the maximum value, and a configuration is possible in which a total value, an average value, a mode value, or the like of the plurality of personality values is used as the growth parameter.

The personality parameter changes due to the manner in which the user interacts with the robot 200 and, as such, by setting the growth parameter on the basis of the personality parameter, an effect of the robot 200 pseudo-growing on the basis of the manner in which the user interacts with the robot 200 can be obtained. That is, a pseudo-development effect of the robot 200 can be obtained.

Returning to FIG. 8, the action controller 115 causes the robot 200 to execute various actions on the basis of the external stimuli acquired by the external stimulus acquirer 111 and the parameter data 121 set by the parameter setter 113. Here, the action that the action controller 115 causes the robot 200 to execute corresponds to at least one of controlling the driver 220 to cause the robot 200 to perform various motions, and controlling the outputter 230 to cause the robot 200 to output various sounds such as animal sounds or the like.

The action controller 115 causes the robot 200 to execute an action corresponding to an action trigger. The action trigger is a condition for the robot 200 to act. Examples of the action trigger include triggers based on the external stimuli (events) acquired by the external stimulus acquirer 111, and triggers not based on the external stimuli.

More specifically, the action controller 115 causes the robot 200 to execute a first action that is dependent on the pseudo-growth of the robot 200, and a second action that is not dependent on the pseudo-growth of the robot 200 and is dependent on the individuality of the robot 200. Next, the first action and the second action are described.

(I) First action

The first action is an action for which action content changes in accordance with the pseudo-growth of the robot 200. With real living creatures as well, actions such as behaviors, voices, and the like differ for juveniles and adults. For example, with a real living creature, a juvenile acts wildly and speaks with a high-pitched voice, but that wild behavior diminishes and the voice becomes deeper when that real living creature becomes an adult. The first action is an action for expressing differences in the action content based on differences in the degree of growth of the living creature.

The action controller 115 causes the robot 200 to execute, as the first action, a basic action that is non-dependent on the personality parameter, and a personality action that is dependent on the personality parameter. Here, the basic action is dependent on the pseudo-growth of the robot 200, but is non-dependent on the pseudo-personality of the robot 200. In other words, the basic action is an action that does not change due to the manner in which the user interacts with (takes care of) the robot 200. In yet other words, the basic action is an action for which the action content is the same even if the pseudo-personality of the robot 200 differs, and is an action for which the action content does not differ due to changes in the pseudo-personality of the robot 200. In contrast, the personality action is an action that is dependent on both the pseudo-growth and the pseudo-personality of the robot 200. In other words, the personality action is an action that changes due to the manner in which the user interacts with (takes care of) the robot 200. In yet other words, the personality action is an action for which the action content differs due to differences in the pseudo-personality of the robot 200.

The action controller 115 selects, from among the basic action and the personality action, the first action with a probability corresponding to the growth parameter. Specifically, the action controller 115 controls the robot 200 so that variation is introduced into the action content in accordance with the pseudo-growth of the robot 200, that is, as the growth parameter increases. To achieve this, the action controller 115 references the growth table 123.

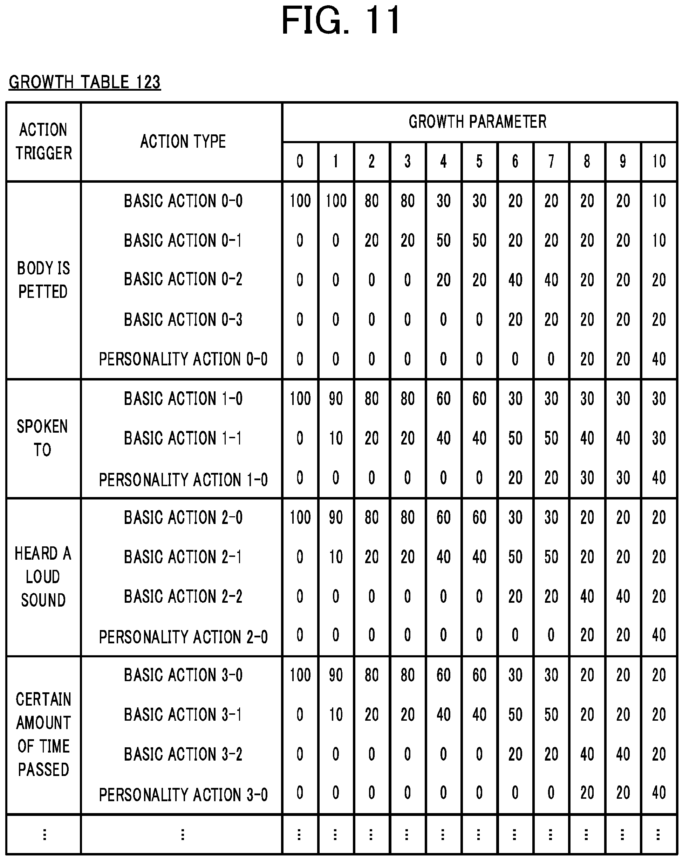

As illustrated in FIG. 11, the growth table 123 defines types of actions to be performed by the robot 200 in response to action triggers such as external stimuli or the like, and a probability of each action being selected in accordance with the growth parameter (hereinafter referred to as "action selection probability"). The growth table 123 defines the action selection probability such that the probability of the basic action being selected while the growth parameter is small is high, and the probability of the personality action being selected increases as the growth parameter increases. Additionally, the growth table 123 defines the action selection probability such that the types of selectable basic actions increase as the growth parameter increases.

For example, a case is assumed in which, as illustrated in FIG. 10, as the current personality value of the robot 200, the personality value (chipper) is 3, the personality value (active) is 8, the personality value (shy) is 5, and the personality value (spoiled) is 4, and a loud sound is detected by the microphone 213. In this case, the growth parameter is 8, which is the maximum value of the four personality values, and the action trigger is "heard a loud sound." In the growth table 123 illustrated in FIG. 11, when referencing the entry for when the action trigger is "heard a loud sound" and the growth parameter is 8, it is clear that the action selection probability of "basic action 2-0" is 20%, the action selection probability of "basic action 2-1" is 20%, the action selection probability of "basic action 2-2" is 40%, and the action selection probability of "personality action 2-0" is 20%.

That is, in this case, the action controller 115 selects the "basic action 2-0" at a probability of 20%, the "basic action 2-1" at a probability of 20%, the "basic action 2-2" at a probability of 40%, and the "personality action 2-0" at a probability of 20%. When the basic action or the personality action is selected in this manner, the action controller 115 references the action content table 124 and the motion table 125 and causes the robot 200 to execute the action of the content corresponding to the selected basic action or personality action.

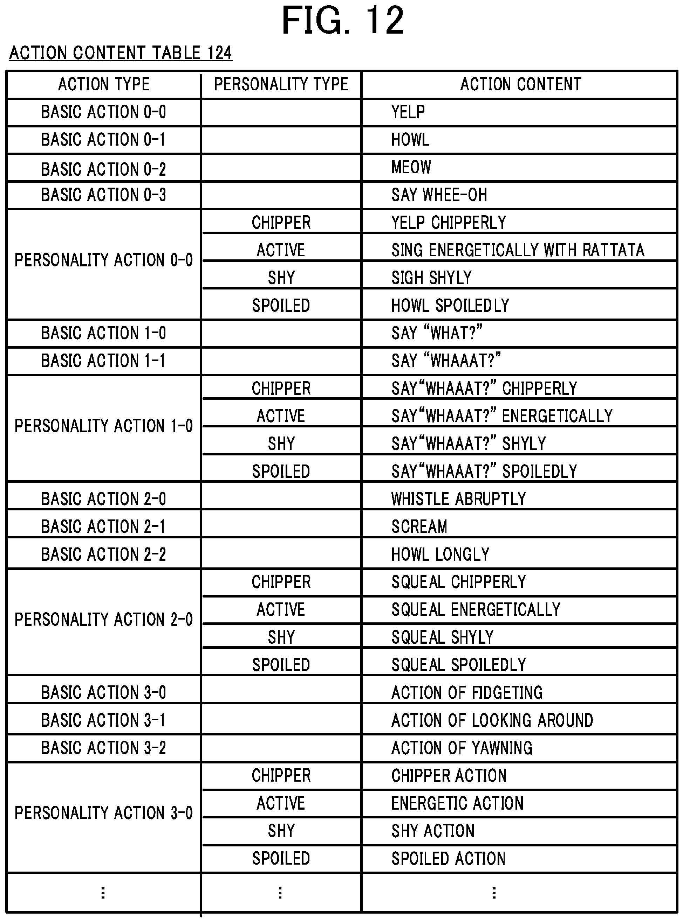

As illustrated in FIG. 12, the action content table 124 is a table that defines the specific action content of each action defined in the growth table 123. Additionally, the action content table 124 individually defines the action content of the personality actions for the four types of personality values (chipper, active, shy, and spoiled). When "personality action 2-0" is selected, the action controller 115 further selects one of the four types of personality actions in accordance with the four personality values.

The action controller 115 calculates, as the selection probability of each personality action, a value obtained by dividing the personality value corresponding to that personality action by the total value of the four personality values. For example, in a case in which the personality value (chipper) is 3, the personality value (active) is 8, the personality value (shy) is 5, and the personality value (spoiled) is 4, the total value of these is 3+8+5+4 = 20. In this case, the action controller 115 selects the personality action of "chipper" with a 3/20 = 15% probability, the personality action of "active" with an 8/20 = 40% probability, the personality action of "shy" with a 5/20 = 25% probability, and the personality action of "spoiled" with a 4/20 = 20% probability.

Note that, in the growth table 123 illustrated in FIG. 11, one personality action is selected for each action trigger but, as with the basic actions, a configuration is possible in which the types of selected personality actions are increased in accordance with increases in the personality values. Provided that the growth table 123 can, for each action trigger, define a function (growth function) that returns, with the growth parameter as an argument, the action selection probability of each action type, any form may be used for the growth table 123, and the growth table 123 need not necessarily be in the form of tabular data such as illustrated in FIG. 11.

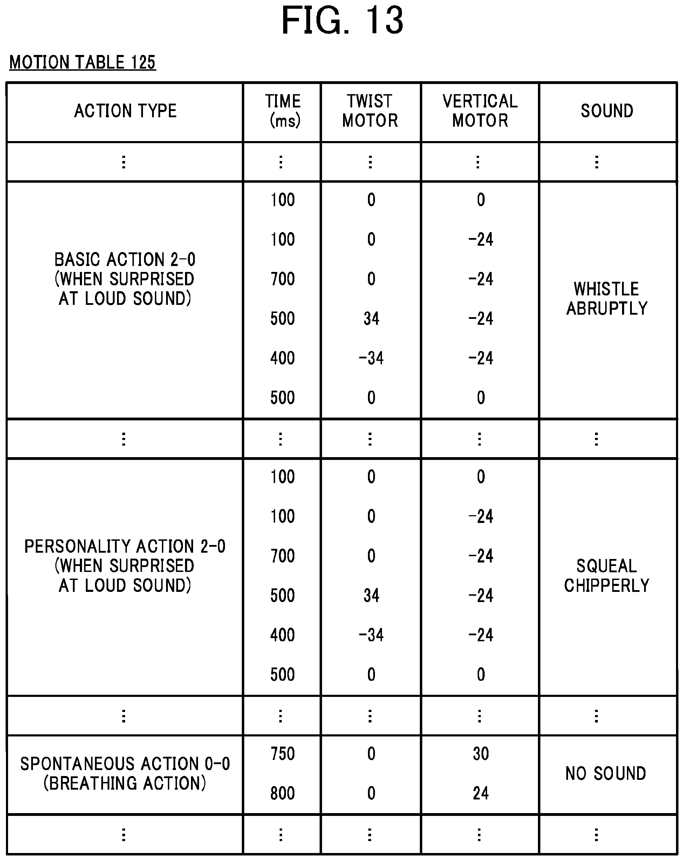

As illustrated in FIG. 13, the motion table 125 is a table that defines, for each action defined in the growth table 123, the manner in which the action controller 115 controls the twist motor 221 and the vertical motor 222. Specifically, the motion table 125 defines, for every action, each of an action time (ms), an action angle of the twist motor 221 after the action time, and an action angle of the vertical motor 222 after the action time. Furthermore, the motion table 125 defines, for every action, sound data to be output from the speaker 231.

For example, when the basic action 2-0 is selected, firstly, after 100 ms, the action controller 115 controls the twist motor 221 and the vertical motor 222 so that the angles are 0 degrees and, after 100 ms, controls so that the angle of the vertical motor 222 is -24 degrees. Then, the action controller 115 does not rotate for 700 ms thereafter, and then controls so that, after 500 ms, the angle of the twist motor 221 is 34 degrees and the angle of the vertical motor 222 is -24 degrees. Then, the action controller 115 controls so that, after 400 ms, the angle of the twist motor 221 is -34 degrees and then controls so that, after 500 ms, the angles of the twist motor 221 and the vertical motor 222 are 0 degrees, thereby completing the action of the basic action 2-0. Additionally, in parallel with the driving of the twist motor 221 and the vertical motor 222, the action controller 115 plays an animal sound of an abrupt whistle from the speaker 231 on the basis of sound data of an abrupt whistle sound.

(II) Second action

The second action is an action for which changes in the action content according to the pseudo-growth of the robot 200 do not occur, and is an action for which the action content varies due to differences in the individuality of the robot 200. Here, the phrase "individuality of the robot 200" refers to characteristics unique to the robot 200 that are different from other robots of the same type as the robot 200. In other words, the "individuality of the robot 200" corresponds to a "behavior" such as a manner of moving or a manner of speaking that is not dependent on acquired factors such as the manner in which the user interacts with or cares for the robot 200.

More specifically, among the characteristics of real living creatures that differ among living creatures of the same type, there exist characteristics that are based on innate factors such as genetics and that do not change depending on factors during the growth process after birth. The second action is an action for imitating such individuality. The second action may also be called an "individuality action."

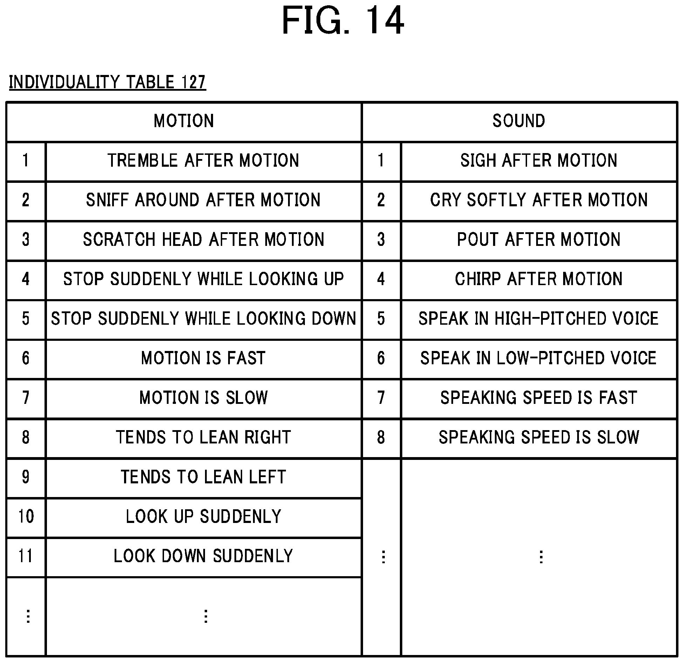

The parameter setter 113 references the individuality table 127 to set the second action that the robot 200 is to be caused to execute. As illustrated in FIG. 14, the individuality table 127 is a table that defines a plurality of candidates that the robot 200 can be caused to execute as the second action. The parameter setter 113 selects, from the individuality table 127 and as the second action that the robot 200 is to be caused to execute, at least one of a motion by the driver 220 and a sound to be output from the speaker 231. As a result, the parameter setter 113 sets the individuality of the robot 200.

The parameter setter 113 sets the second action using the individuality ID 128. The individuality ID 128 is information expressing the individuality of the robot 200 and, as such, preferably is unique information different from the individuality ID of other robots. For example, a Bluetooth Low Energy (BLE, registered trademark) ID can be used as the individuality ID 128. Using a BLE ID makes it possible to substantially randomly set the individuality of the robot 200.

The individuality ID 128 is written to the robot 200 by an operation of a worker prior to the robot 200 being started up for the first time by the user (for example, when the robot 200 is manufactured in the factory). In one example, the individuality ID 128 is stored in the ROM of the storage 120 so that the individuality ID 128 cannot be overwritten by the user after being set. The parameter setter 113 sets, as the second action and from among the plurality of actions (motions and sounds) defined in the individuality table 127, an action indicated by the individuality ID 128 set as described above.

Note that the individuality ID 128 is not limited to being set when the robot 200 is manufactured in the factory, and a configuration is possible in which the individuality ID 128 is set according to the will of the user. For example, a configuration is possible in which, when a user replaces a robot 200 that they already own with a new robot 200, the user copies and uses the individuality ID 128 of the old robot 200 as the individuality ID 128 of the new robot 200. As a result, the individuality of the old robot 200 can be inherited by the new robot 200. In other words, the new robot 200 can be imparted with the same individuality as the old robot 200 in the same manner as individuality is passed down from parent to child. Additionally, setting the individuality ID 128 according to the will of the user makes it possible to acquire a robot 200 that has valuable individuality similar to, for example, a pet with pedigree papers.

When the individuality ID 128 is set in this manner, the action controller 115 causes the robot 200 to execute, in addition to the first action, the second action indicated by the individuality ID 128. For example, when "tremble after action" is set as the second action, after causing the robot 200 to execute the first action, the action controller 115 controls the driver 220 and performs a motion of shaking the head 204 or the torso 206. Alternatively, when "cry softly after action" is set as the second action, after causing the robot 200 to execute the first action, the action controller 115 outputs the sound of crying softly from the speaker 231.

Note that, depending on the second action, the action controller 115 is not limited to executing the second action after the first action, and a configuration is possible in which the action controller 115 executes the second action at the same time as the first action or prior to the first action. For example, when "motion is fast" is set as the second action, the action controller 115 quickly performs the motion of the first action when causing the robot 200 to execute the first action. Alternatively, when "speak with high-pitch voice" is set as the second action, the action controller 115 outputs a high-pitch sound when causing the robot 200 to execute the first action. Additionally, when the second action is an action that is independent from the first action, the action controller 115 is not limited to executing the second action at a timing associated with the first action, and may execute the second action at a timing independent from the first action.

More specifically, the action controller 115 causes the robot 200 to execute the first action during the period in which the pseudo-growth of the robot 200 does not satisfy a predetermined condition. Moreover, the action controller 115 causes the robot 200 to execute the first action and the second action after the pseudo-growth of the robot 200 satisfies the predetermined condition.

In other words, the action controller 115 causes the robot 200 to execute only the first action for a certain period after the pseudo-birth of the robot 200, and does not cause the robot 200 to execute the second action immediately after the pseudo-birth. Then, after a certain degree of pseudo-growth of the robot 200 has been reached, the action controller 115 causes the robot 200 to execute the second action.

In real living creatures as well, individuality begins to develop after that living creature has grown a certain amount. As such, configuring such that the robot 200 executes the second action after a certain period has elapsed since the pseudo-birth makes it possible to more realistically imitate the manner of development of individuality of a real living creature. Additionally, since the individuality of the robot 200 is not discovered immediately after purchasing the robot 200, the enjoyment of raising the robot 200 increases.

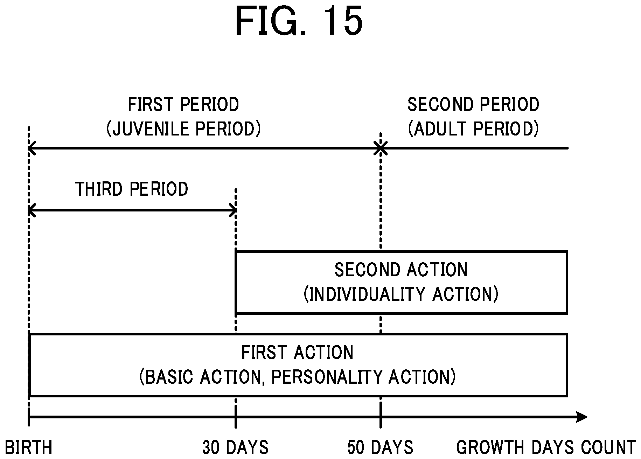

Here, the predetermined condition is satisfied when the number of days of pseudo-growth of the robot 200 reaches a predetermined number of days. Specifically, as illustrated in FIG. 15, from the pseudo-birth until a third period, which is a period corresponding to the predetermined number of days, elapses, the action controller 115 causes the robot 200 to execute the first action and does not cause the robot 200 to execute the second action. In contrast, the action controller 115 causes the robot 200 to execute both the first action and the second action in the period after the third period has elapsed since the pseudo-birth.

The predetermined number of days is less than the number of days required for the pseudo-growth of the robot 200 to complete. In other words, the third period is shorter than the first period that is the juvenile period. For example, when the first period is 50-days, the third period corresponding to the predetermined number of days is set to 30-days. Thus, by starting execution of the second action during the period in which the robot 200 grows from a juvenile to an adult, it is possible to more realistically imitate the manner of development of individuality of a real living creature.

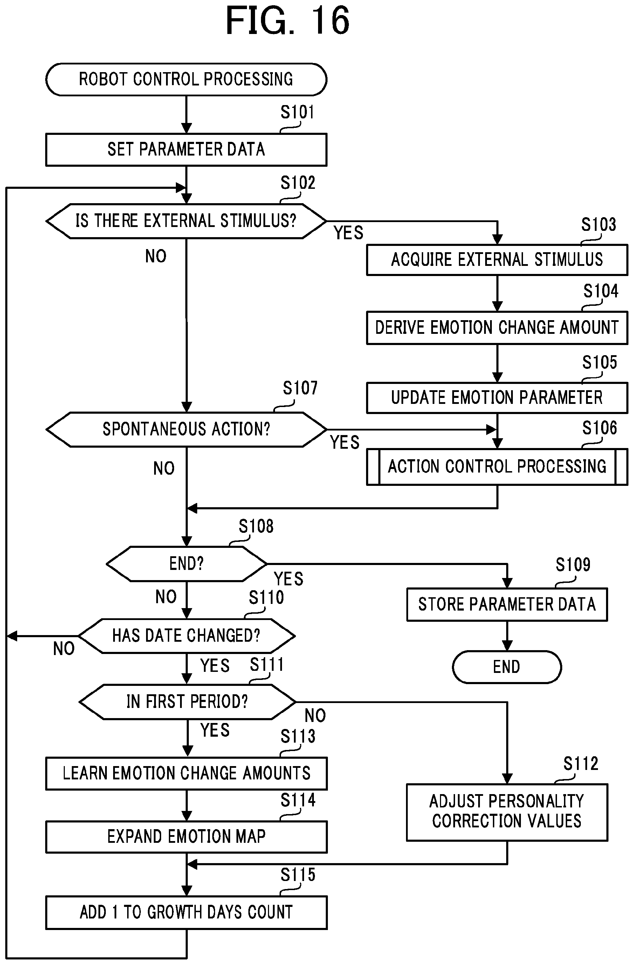

Next, the flow of robot control processing is described while referencing FIG. 16. The robot control processing illustrated in FIG. 16 is executed by the controller 110 of the control device 100, with the user turning ON the power of the robot 200 as a trigger. The robot control processing is an example of a robot 200 control method.

When the robot control processing starts, the controller 110 functions as the parameter setter 113 and sets the parameter data 121 (step S101). When the robot 200 is started up for the first time (the time of the first start up by the user after shipping from the factory), the controller 110 sets the various parameters, namely the growth days count, the emotion parameter, the emotion change amount, the personality parameter, and the growth parameter, to initial values (for example, 0). Meanwhile, at the time of starting up for the second and subsequent times, the controller 110 reads out the values of the various parameters stored in step S109, described later, of the robot control processing to set the parameter data 121. However, a configuration is possible in which the emotion parameters are all initialized to 0 each time the power is turned ON.

When setting the parameter data 121, the controller 110 determines whether there is an external stimulus detected by the sensor 210 (step S102). When there is an external stimulus (S102; YES), the controller 110 functions as the external stimulus acquirer 111 and acquires the external stimulus from the sensor 210 (step S103).

When the external stimulus is acquired, the controller 110 derives the emotion change amounts corresponding to the acquired external stimulus (step S104). Then, the controller 110 updates the emotion parameter by adding or subtracting the derived emotion change amounts from the current emotion parameter (step S105).

When the emotion parameter is updated, the controller 110 executes the action control processing, with the external stimulus acquired in step S103 as an action trigger (step S106), and then executes step S108.

Meanwhile, when there is not an external stimulus in step S102 (step S102; NO), the controller 110 determines whether to perform a spontaneous action such as a breathing action or the like (step S107). Any method may be used as the method for determining whether to perform the spontaneous action. In one example, it is assumed that the determination of step S107 is "YES" when passing information, that the timer notifies per first reference period (for example, five seconds), is detected.

That is, when performing the spontaneous action (step S107; YES), when passing information expressing "passage of the first reference time" is detected as the action trigger, the controller 110 proceeds to step S106 and executes the action control processing and, then, executes step S108.

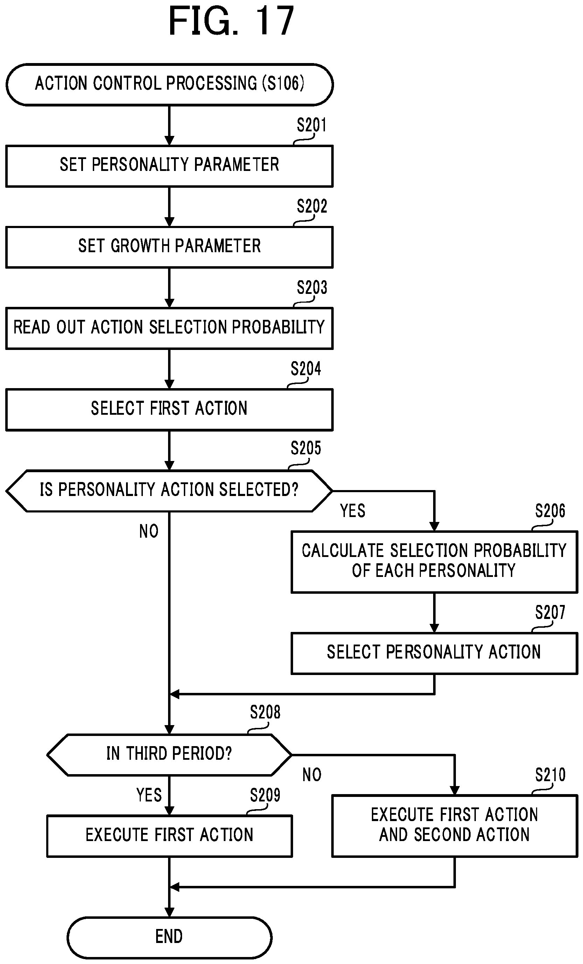

Next, the action control processing executed in step S106 is described while referencing FIG. 17.

When the action control processing starts, the controller 110 sets the personality parameter (step S201). Specifically, in the first period, the controller 110 calculates, in accordance with (Equation 1) described above, the various personality values of the personality parameter from the emotion change amounts learned in step S113. Meanwhile, in the second period, the controller 110 calculates, in accordance with (Equation 2) described above, the various personality values of the personality parameter from the emotion change amounts learned in step S113 and the personality correction values adjusted in step S112.

When the personality parameter is set, the controller 110 sets the growth parameter (step S202). Specifically, the controller 110 sets, as the growth parameter, the maximum value among the plurality of personality values included in the personality parameter.

When the growth parameter is set, the controller 110 references the growth table 123 and reads out the action selection probability corresponding to the action trigger, given when executing the action control processing, and the growth parameter calculated in step S202 (step S203). Then, the controller 110 selects, on the basis of the read-out action selection probability, the first action using random numbers (step S204).

For example, when the calculated growth parameter is 8 and the action trigger is "heard a loud sound", the controller 110 selects the "basic action 2-0" at a probability of 20%, the "basic action 2-1" at a probability of 20%, the "basic action 2-2" at a probability of 40%, and the "personality action 2-0" at a probability of 20% (see FIG. 11).

When the first action is selected, the controller 110 determines whether a personality action is selected as the first action (step S205). When a basic action is selected as the first action (step S205; NO), step S208 is executed.

When a personality action is selected as the first action (step S205; YES), the controller 110 calculates the selection probability of each personality on the basis of the magnitudes of the four personality values (step S206). Then, the controller 110 selects, on the basis of the calculated selection probability of each personality, the personality action using random numbers (step S207)

When a basic action or a personality action is selected as the first action, the controller 110 determines whether it is in the third period (for example, 30 days from birth) (step S208). When it is in the third period (step S208; YES), the controller 110 causes the robot 200 to execute the selected first action (step S209). Specifically, the controller 110 performs the motion and the sound output defined in the motion table 125 to cause the robot 200 to execute the action of the action content defined in the action content table 124.

In contrast, when it is not in the third period (step S208; NO), in addition to causing the robot 200 to execute the first action as in step S209, the controller 110 causes the robot 200 to execute the second action (step S210). Specifically, when the growth days count of the robot 200 has reached a certain point, in addition to the first action, the controller 110 causes the robot 200 to execute the second action expressed by the individuality ID 128 from among the plurality of actions (motions and sounds) defined in the individuality table 127. As a result, the controller 110 expresses the individuality of the robot 200. Thus, the action control processing illustrated in FIG. 17 is ended.

Returning to FIG. 16, when not perform the spontaneous action (step S107; No), the controller 110 determines whether to end the processing (step S108). For example, when the operator 240 receives a power OFF command of the robot 200 from the user, the processing is ended. When ending the processing (step S108; YES), the controller 110 stores the current parameter data 121 in the non-volatile memory (for example, flash memory) of the storage 120 (step S109), and ends the robot control processing illustrated in FIG. 16.

When not ending the processing (step S108; NO), the controller 110 uses the clock function to determine whether a date has changed (step S110). When the date has not changed (step S110; NO), the controller 110 executes step S102.

When the date has changed (step S110; YES), the controller 110 determines whether it is in the first period (for example, 50 days from birth) (step S111). When it is not in the first period but, rather, is in the second period (step 5111; NO), the controller 110 adjusts the personality correction values (step S112) and executes step S115.

When it is in the first period (step S111; YES), the controller 110 learns the emotion change amounts (step S113). Specifically, the controller 110 changes the values of the emotion change amounts DXP, DXM, DYP, and DYM in accordance with whether the emotion parameter has reached the maximum value or the minimum value of the emotion map 300.

When the learning is of the emotion change amounts is performed, the controller 110 increases both the minimum value and the maximum value of the emotion map 300 by a predetermined increase amount (for example, 2) (step S114). Then, the controller 110 adds 1 to the growth days count (step S115) and executes step S102.

Note that, in FIG. 16, the learning of the emotion change amounts and the expanding of the emotion map 300 are performed after a determination is made that the date has changed in step S110, but a configuration is possible in which the learning of the emotion change amounts and the expanding of the emotion map 300 are performed after a determination is made that a reference time (for example, 9:00 PM) has arrived. Moreover, a configuration is possible in which the determination in step S 110 is not a determination based on the actual date, but is a determination performed on the basis of a value obtained by accumulating, by the timer function of the controller 110, an amount of time that the robot 200 has been turned ON. For example, a configuration is possible in which every time a cumulative amount of time that the power is ON is an amount of time that is a multiple of 24, the robot 200 is regarded as having grown one day, and the learning of the emotion change amounts and the expanding of the emotion map 300 are carried out. Additionally, a configuration is possible in which, in consideration of a user that neglects the robot 200, a determination is made on the basis of number of acquisitions of the external stimulus so that the growth of the robot 200 slows when the robot 200 is neglected (for example, the growth days count is increased by one day every time the number of acquisitions reaches 100 times).

As described above, the robot 200 according to the present embodiment includes action control means that causes the robot 200 to execute the first action that is dependent on the pseudo-growth of the robot 200, and the second action that is non-dependent on the pseudo-growth of the robot 200 and is dependent on the individuality of the robot 200. Thus, the robot 200 executes, in addition to the first action that is dependent on the pseudo-growth, the second action that is non-dependent on the pseudo-growth and is dependent on the individuality. That is, upon detection of the predetermined trigger, the controller 200 controls one of the driver 220 and the speaker 231 as the sound outputter so that the robot 200 executes the first action set so that action content changes in accordance with the pseudo-growth of the robot 200, and the second action set so that a change of the action content according to the pseudo-growth does not occur and also set so that the action content varies due to a difference in the individuality of the robot 200. As such, in addition to manner in which a living creature grows, it is possible to also imitate individuality based on congenital factors such as genetics. As a result, the robot 200 of the present embodiment can realistically imitate a living creature.

Modified Examples

Embodiments of the present disclosure are described above, but these embodiments are merely examples and do not limit the scope of application of the present disclosure. That is, various applications of the embodiments of the present disclosure are possible, and all embodiments are included in the scope of the present disclosure.

For example, in the embodiment described above, the growth parameter is set to the maximum value among the plurality of personality values included in the personality parameter. However, the growth parameter is not limited to being based on the personality parameter. For example, a configuration is possible in which the growth parameter is directly based on the growth days count. Additionally, the setting of the parameter data 121 by the parameter setter 113 is not limited to the method described in the embodiment described above, and a variety of methods can be used.

In the embodiment described above, the predetermined condition for executing the second action is satisfied when the number of days of pseudo-growth of the robot 200 reaches the predetermined number of days. However, the predetermined condition is not limited thereto. For example, a configuration is possible in which the predetermined condition is satisfied when the growth parameter reaches a predetermined value.

In the embodiment described above, the exterior 201 is formed in a barrel shape from the head 204 to the torso 206, and the robot 200 has a shape as if lying on its belly. However, the robot 200 is not limited to resembling a living organism that has a shape as if lying on its belly. For example, a configuration is possible in which the robot 200 has a shape provided with arms and legs, and resembles a living organism that walks on four legs or two legs.

In the embodiment described above, the control device 100 is installed in the robot 200, but a configuration is possible in which the control device 100 is not installed in the robot 200 but, rather, is a separated device (for example, a server). When the control device 100 is provided outside the robot 200, the robot 200 and the control device 100 communicate and exchange data with each other via communicators. The external stimulus acquirer 111 acquires the external stimulus detected by the sensor 210, and the action controller 115 controls the driver 220 and the outputter 230 via communication with such a robot 200.

In the embodiment described above, in the controller 110, the CPU executes the program stored in the ROM to function as the various components, namely, the external stimulus acquirer 111, the parameter setter 113, and the action controller 115. However, in the present disclosure, the controller 110 may include, for example, dedicated hardware such as an Application Specific Integrated Circuit (ASIC), a Field-Programmable Gate Array (FPGA), various control circuitry, or the like instead of the CPU, and this dedicated hardware may function as the various components, namely the external stimulus acquirer 111, the parameter setter 113, and the action controller 115. In this case, the functions of each of the components may be realized by individual pieces of hardware, or the functions of each of the components may be collectively realized by a single piece of hardware. Additionally, the functions of each of the components may be realized in part by dedicated hardware and in part by software or firmware.

It is possible to provide a robot provided in advance with the configurations for realizing the functions according to the present disclosure, but it is also possible to apply a program to cause an existing information processing device or the like to function as the robot according to the present disclosure. That is, a configuration is possible in which a CPU or the like that controls an existing information processing apparatus or the like is used to execute a program for realizing the various functional components of the robot 200 described in the foregoing embodiments, thereby causing the existing information processing device to function as the robot according to the present disclosure.

Additionally, any method may be used to apply the program. For example, the program can be applied by storing the program on a non-transitory computer-readable recording medium such as a flexible disc, a compact disc (CD) ROM, a digital versatile disc (DVD) ROM, and a memory card. Furthermore, the program can be superimposed on a carrier wave and applied via a communication medium such as the internet. For example, the program may be posted to and distributed via a bulletin board system (BBS) on a communication network. Moreover, a configuration is possible in which the processing described above is executed by starting the program and, under the control of the operating system (OS), executing the program in the same manner as other applications/programs.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

**Claims**

1.   A robot (200) comprising:

   a coupler (205) coupling a first part (204) to a second part (206);
   a driver (220) driving the coupler (205); and
   a sound outputter (231) that outputs a sound, wherein
   the robot (200) includes a controller (110) that, upon detection of a predetermined trigger, controls at least one of the driver (220) or the sound outputter (231) so that the robot (200) executes a first action set so that action content changes in accordance with pseudo-growth of the robot (200), and a second action set so that a change of the action content according to the pseudo-growth does not occur and also set so that the action content varies due to a difference in an individuality of the robot (200).

2.   The robot (200) according to claim 1, further comprising:

   a storage (120) storing a first table (123, 124) in which action content of the first action is defined in association with each degree of growth, and a second table (124) in which action content of the second action is defined in association with each individuality, wherein
   the controller (110)
   controls at least one of the driver (220) or the sound outputter (231) based on the first table (124) and the second table (124).

3.   The robot (200) according to claim 1 or 2, wherein
   the controller (110)

   controls at least one of the driver (220) or the sound outputter (231) so that the robot (200) executes only the first action of the first action and the second action in a period in which a growth state of the pseudo-growth does not satisfy a predetermined growth reference, and
   controls at least one of the driver (220) or the sound outputter (231) so that the robot (200) executes the second action in addition to the first action after the growth state of the pseudo-growth satisfies the predetermined growth reference.

4.   The robot (200) according to claim 3, wherein the predetermined growth reference is satisfied upon a number of days of growth, as the growth state, reaching a predetermined number of days.

5.   The robot (200) according to claim 4, wherein the predetermined number of days is less than a number of days required for the pseudo-growth to complete.

6.   The robot (200) according to claim 1 or 2, wherein
   the controller (110)
   controls at least one of the driver (220) or the sound outputter (231) so that the robot (200) executes, as the first action, an action selected from among a personality action set so that action content varies due to a difference in a pseudo-personality of the robot (200), and a basic action set so that the action content does not vary due to the difference in the pseudo-personality of the robot (200).

7.   The robot (200) according to claim 6, wherein a selection probability of the personality action being selected and a selection probability of the basic action being selected are set so as to change in accordance with the pseudo-growth of the robot (200).

8.   The robot (200) according to claim 6, further comprising:

a sensor (210) that detects an external stimulus, wherein
the controller (110)
updates, in accordance with the external stimulus detected by the sensor (210), a parameter for determining the pseudo-personality.

9. The robot (200) according to claim 1, further comprising:

a sensor (210) that detects an external stimulus, wherein
the controller (110)
detects, as the trigger, the external stimulus detected by the sensor (210).

10. The robot (200) according to claim 9, wherein
the controller (110)
controls at least one of the driver (220) or the sound outputter (231) so that the robot (200) executes an action corresponding to a type of the external stimulus detected by the sensor (210).

11. The robot (200) according to claim 1 or 2, wherein
the controller (110)
detects, as the trigger, passing information notified per passage of a predetermined reference time.

12. The robot (200) according to claim 1 or 2, wherein

the first part (204) is a head, and
the second part (206) is a torso.

13. The robot (200) according to claim 12, wherein the head (204) and the torso (206) are covered by an exterior (201) including at least one of a decorative part (202) resembling an eye or fur (203).

14. A robot control method for a robot (200) including a coupler (205) coupling a first part (204) to a second part (206), a driver (220) driving the coupler (205), and a sound outputter (231) that outputs a sound, the method comprising:

a detection step (S102) of detecting a predetermined trigger; and
upon detection of the predetermined trigger in the detection step (S102), a control step (S106) of controlling at least one of the driver (220) or the sound outputter (231) so that the robot (200) executes a first action set so that action content changes in accordance with pseudo-growth of the robot (200), and a second action set so that a change of the action content according to the pseudo-growth does not occur and also set so that the action content varies due to a difference in an individuality of the robot (200).

15. A program causing a computer of a robot (200) including a coupler (205) coupling a first part (204) to a second part (206), a driver (220) driving the coupler (205), and a sound outputter (231) that outputs a sound, to realize:

detection means that detects a predetermined trigger; and
control means that, upon detection of the predetermined trigger, controls at least one of the driver (220) or the sound outputter (231) so that the robot (200) executes a first action set so that action content changes in accordance with pseudo-growth of the robot (200), and a second action set so that a change of the action content according to the pseudo-growth does not occur and also set so that the action content varies due to a difference in an individuality of the robot (200).

# FIG. 1

# FIG. 2

FRONT ◄──────► BACK

200

203  203  203  ···

202

211

222

231  211  213  215

221

250

201

212  214

204  205  206

207

+Z
+Y ◄─ ⊗
+X

# FIG. 3

215
213
211
231

207

211

214  206

250

205

212

204

BACK

RIGHT ◄──────► LEFT

FRONT

+Z

+X

+Y

# FIG. 4

0

207

206

−100

221

204

RIGHT ⟷ LEFT

+Z

+X ← ⊙
+Y

# FIG. 5

0

207

206

221

204

+100

RIGHT ⟷ LEFT

+Z

+X ← ⊙
+Y

# FIG. 6

+100

FRONT ←——→ BACK

207

0

204   222   221

205

206

+Z

+Y ←⊗
+X

# FIG. 7

+100

FRONT ←——→ BACK

207

0

222

221

205

204   206

+Z

+Y ←⊗
+X

−100

# FIG. 8

200

**ROBOT**

**CONTROL DEVICE** 100

BL

**CONTROLLER** 110

EXTERNAL STIMULUS ACQUIRER 111

PARAMETER SETTER 113

ACTION CONTROLLER 115

**STORAGE** 120

PARAMETER DATA 121

GROWTH TABLE 123

ACTION CONTENT TABLE 124

MOTION TABLE 125

INDIVIDUALITY TABLE 127

INDIVIDUALITY ID 128

SENSOR 210

DRIVER 220

OUTPUTTER 230

OPERATOR 240

# FIG. 9

# FIG. 10

# FIG. 11

GROWTH TABLE 123

| ACTION TRIGGER | ACTION TYPE | GROWTH PARAMETER | | | | | | | | | | |
|---|---|---|---|---|---|---|---|---|---|---|---|---|
| | | 0 | 1 | 2 | 3 | 4 | 5 | 6 | 7 | 8 | 9 | 10 |
| BODY IS PETTED | BASIC ACTION 0-0 | 100 | 100 | 80 | 80 | 30 | 30 | 20 | 20 | 20 | 20 | 10 |
| | BASIC ACTION 0-1 | 0 | 0 | 20 | 20 | 50 | 50 | 20 | 20 | 20 | 20 | 10 |
| | BASIC ACTION 0-2 | 0 | 0 | 0 | 0 | 20 | 20 | 40 | 40 | 20 | 20 | 20 |
| | BASIC ACTION 0-3 | 0 | 0 | 0 | 0 | 0 | 0 | 20 | 20 | 20 | 20 | 20 |
| | PERSONALITY ACTION 0-0 | 0 | 0 | 0 | 0 | 0 | 0 | 0 | 0 | 20 | 20 | 40 |
| SPOKEN TO | BASIC ACTION 1-0 | 100 | 90 | 80 | 80 | 60 | 60 | 30 | 30 | 30 | 30 | 30 |
| | BASIC ACTION 1-1 | 0 | 10 | 20 | 20 | 40 | 40 | 50 | 50 | 40 | 40 | 30 |
| | PERSONALITY ACTION 1-0 | 0 | 0 | 0 | 0 | 0 | 0 | 20 | 20 | 30 | 30 | 40 |
| HEARD A LOUD SOUND | BASIC ACTION 2-0 | 100 | 90 | 80 | 80 | 60 | 60 | 30 | 30 | 20 | 20 | 20 |
| | BASIC ACTION 2-1 | 0 | 10 | 20 | 20 | 40 | 40 | 50 | 50 | 20 | 20 | 20 |
| | BASIC ACTION 2-2 | 0 | 0 | 0 | 0 | 0 | 0 | 20 | 20 | 40 | 40 | 20 |
| | PERSONALITY ACTION 2-0 | 0 | 0 | 0 | 0 | 0 | 0 | 0 | 0 | 20 | 20 | 40 |
| CERTAIN AMOUNT OF TIME PASSED | BASIC ACTION 3-0 | 100 | 90 | 80 | 80 | 60 | 60 | 30 | 30 | 20 | 20 | 20 |
| | BASIC ACTION 3-1 | 0 | 10 | 20 | 20 | 40 | 40 | 50 | 50 | 20 | 20 | 20 |
| | BASIC ACTION 3-2 | 0 | 0 | 0 | 0 | 0 | 0 | 20 | 20 | 40 | 40 | 20 |
| | PERSONALITY ACTION 3-0 | 0 | 0 | 0 | 0 | 0 | 0 | 0 | 0 | 20 | 20 | 40 |
| ⋮ | ⋮ | ⋮ | ⋮ | ⋮ | ⋮ | ⋮ | ⋮ | ⋮ | ⋮ | ⋮ | ⋮ | ⋮ |

# FIG. 12

ACTION CONTENT TABLE 124

| ACTION TYPE | PERSONALITY TYPE | ACTION CONTENT |
|---|---|---|
| BASIC ACTION 0-0 | | YELP |
| BASIC ACTION 0-1 | | HOWL |
| BASIC ACTION 0-2 | | MEOW |
| BASIC ACTION 0-3 | | SAY WHEE-OH |
| PERSONALITY ACTION 0-0 | CHIPPER | YELP CHIPPERLY |
| | ACTIVE | SING ENERGETICALLY WITH RATTATA |
| | SHY | SIGH SHYLY |
| | SPOILED | HOWL SPOILEDLY |
| BASIC ACTION 1-0 | | SAY "WHAT?" |
| BASIC ACTION 1-1 | | SAY "WHAAAT?" |
| PERSONALITY ACTION 1-0 | CHIPPER | SAY "WHAAAT?" CHIPPERLY |
| | ACTIVE | SAY "WHAAAT?" ENERGETICALLY |
| | SHY | SAY "WHAAAT?" SHYLY |
| | SPOILED | SAY "WHAAAT?" SPOILEDLY |
| BASIC ACTION 2-0 | | WHISTLE ABRUPTLY |
| BASIC ACTION 2-1 | | SCREAM |
| BASIC ACTION 2-2 | | HOWL LONGLY |
| PERSONALITY ACTION 2-0 | CHIPPER | SQUEAL CHIPPERLY |
| | ACTIVE | SQUEAL ENERGETICALLY |
| | SHY | SQUEAL SHYLY |
| | SPOILED | SQUEAL SPOILEDLY |
| BASIC ACTION 3-0 | | ACTION OF FIDGETING |
| BASIC ACTION 3-1 | | ACTION OF LOOKING AROUND |
| BASIC ACTION 3-2 | | ACTION OF YAWNING |
| PERSONALITY ACTION 3-0 | CHIPPER | CHIPPER ACTION |
| | ACTIVE | ENERGETIC ACTION |
| | SHY | SHY ACTION |
| | SPOILED | SPOILED ACTION |
| ⋮ | ⋮ | ⋮ |

# FIG. 13

MOTION TABLE 125

| ACTION TYPE | TIME (ms) | TWIST MOTOR | VERTICAL MOTOR | SOUND |
|---|---|---|---|---|
| ⋮ | ⋮ | ⋮ | ⋮ | ⋮ |
| BASIC ACTION 2-0 (WHEN SURPRISED AT LOUD SOUND) | 100 | 0 | 0 | WHISTLE ABRUPTLY |
|  | 100 | 0 | -24 |  |
|  | 700 | 0 | -24 |  |
|  | 500 | 34 | -24 |  |
|  | 400 | -34 | -24 |  |
|  | 500 | 0 | 0 |  |
| ⋮ | ⋮ | ⋮ | ⋮ | ⋮ |
| PERSONALITY ACTION 2-0 (WHEN SURPRISED AT LOUD SOUND) | 100 | 0 | 0 | SQUEAL CHIPPERLY |
|  | 100 | 0 | -24 |  |
|  | 700 | 0 | -24 |  |
|  | 500 | 34 | -24 |  |
|  | 400 | -34 | -24 |  |
|  | 500 | 0 | 0 |  |
| ⋮ | ⋮ | ⋮ | ⋮ | ⋮ |
| SPONTANEOUS ACTION 0-0 (BREATHING ACTION) | 750 | 0 | 30 | NO SOUND |
|  | 800 | 0 | 24 |  |
| ⋮ | ⋮ | ⋮ | ⋮ | ⋮ |

# FIG. 14

INDIVIDUALITY TABLE 127

| | MOTION | | SOUND |
|---|---|---|---|
| 1 | TREMBLE AFTER MOTION | 1 | SIGH AFTER MOTION |
| 2 | SNIFF AROUND AFTER MOTION | 2 | CRY SOFTLY AFTER MOTION |
| 3 | SCRATCH HEAD AFTER MOTION | 3 | POUT AFTER MOTION |
| 4 | STOP SUDDENLY WHILE LOOKING UP | 4 | CHIRP AFTER MOTION |
| 5 | STOP SUDDENLY WHILE LOOKING DOWN | 5 | SPEAK IN HIGH-PITCHED VOICE |
| 6 | MOTION IS FAST | 6 | SPEAK IN LOW-PITCHED VOICE |
| 7 | MOTION IS SLOW | 7 | SPEAKING SPEED IS FAST |
| 8 | TENDS TO LEAN RIGHT | 8 | SPEAKING SPEED IS SLOW |
| 9 | TENDS TO LEAN LEFT | | |
| 10 | LOOK UP SUDDENLY | | |
| 11 | LOOK DOWN SUDDENLY | ⋮ | ⋮ |
| ⋮ | ⋮ | | |

# FIG. 15

FIRST PERIOD
(JUVENILE PERIOD)

SECOND PERIOD
(ADULT PERIOD)

THIRD PERIOD

SECOND ACTION
(INDIVIDUALITY ACTION)

FIRST ACTION
(BASIC ACTION, PERSONALITY ACTION)

BIRTH        30 DAYS      50 DAYS      GROWTH DAYS COUNT

# FIG. 16

ROBOT CONTROL PROCESSING

S101
SET PARAMETER DATA

S102
IS THERE EXTERNAL STIMULUS? — YES → 

NO

S103
ACQUIRE EXTERNAL STIMULUS

S104
DERIVE EMOTION CHANGE AMOUNT

S105
UPDATE EMOTION PARAMETER

S107
SPONTANEOUS ACTION? — YES →

NO

S106
ACTION CONTROL PROCESSING

S108
END? — YES →

NO

S110
HAS DATE CHANGED? — NO →

YES

S109
STORE PARAMETER DATA

END

S111
IN FIRST PERIOD? — NO →

YES

S113
LEARN EMOTION CHANGE AMOUNTS

S114
EXPAND EMOTION MAP

S112
ADJUST PERSONALITY CORRECTION VALUES

S115
ADD 1 TO GROWTH DAYS COUNT

# FIG. 17

ACTION CONTROL PROCESSING (S106)

S201
SET PERSONALITY PARAMETER

S202
SET GROWTH PARAMETER

S203
READ OUT ACTION SELECTION PROBABILITY

S204
SELECT FIRST ACTION

S205
IS PERSONALITY ACTION SELECTED?

NO

YES

S206
CALCULATE SELECTION PROBABILITY OF EACH PERSONALITY

S207
SELECT PERSONALITY ACTION

S208
IN THIRD PERIOD?

YES

NO

S209
EXECUTE FIRST ACTION

S210
EXECUTE FIRST ACTION AND SECOND ACTION

END

Europäisches
Patentamt

European
Patent Office

Office européen
des brevets

# EUROPEAN SEARCH REPORT

**Application Number**

EP 24 18 1671

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/299999 A1 (HASEGAWA HIROKAZU [JP] ET AL) 22 September 2022 (2022-09-22)<br>* paragraph [0038] *<br>* paragraph [0049] - paragraph [0055] *<br>* paragraph [0060] - paragraph [0061] *<br>* paragraph [0069] - paragraph [0070] *<br>* paragraph [0077] - paragraph [0081] *<br>* paragraph [0112] *<br>* paragraph [0151] - paragraph [0011] *<br>* figures 1, 2, 3, 6, 7, 8, 10, 11, 12, 15 * | 1-15 | INV.<br>A63H11/00<br>G06N3/008<br>B25J13/00 |
| X | US 2006/041332 A1 (SABE KOHTARO [JP] ET AL) 23 February 2006 (2006-02-23)<br>* paragraph [0071] - paragraph [0074] *<br>* paragraph [0151] - paragraph [0163] *<br>* paragraph [0212] *<br>* paragraph [0324] *<br>* figures 1, 2, 9, 10 * | 1-15 | |
| X | US 2022/297018 A1 (HASEGAWA HIROKAZU [JP] ET AL) 22 September 2022 (2022-09-22)<br>* paragraph [0034] - paragraph [0036] *<br>* paragraph [0053] - paragraph [0057] *<br>* paragraph [0074] - paragraph [0082] *<br>* paragraph [0097] *<br>* figures 1, 2, 8, 11, 14 * | 1-15 | **TECHNICAL FIELDS SEARCHED (IPC)**<br><br>G05B |
| A | JP 2022 142109 A (CASIO COMPUTER CO LTD) 30 September 2022 (2022-09-30)<br>* the whole document * | 1-15 | |

The present search report has been drawn up for all claims

| Place of search | Date of completion of the search | Examiner |
|---|---|---|
| The Hague | 2 December 2024 | Falconi, Riccardo |

## ANNEX TO THE EUROPEAN SEARCH REPORT
## ON EUROPEAN PATENT APPLICATION NO.

EP 24 18 1671

This annex lists the patent family members relating to the patent documents cited in the above-mentioned European search report.
The members are as contained in the European Patent Office EDP file on
The European Patent Office is in no way liable for these particulars which are merely given for the purpose of information.

02-12-2024

| Patent document cited in search report | Publication date | Patent family member(s) | | Publication date |
|---|---|---|---|---|
| US 2022299999 A1 | 22-09-2022 | JP | 7192905 B2 | 20-12-2022 |
| | | JP | 7364016 B2 | 18-10-2023 |
| | | JP | 2022142107 A | 30-09-2022 |
| | | JP | 2023024848 A | 17-02-2023 |
| | | US | 2022299999 A1 | 22-09-2022 |
| US 2006041332 A1 | 23-02-2006 | CN | 1338980 A | 06-03-2002 |
| | | KR | 20010101883 A | 15-11-2001 |
| | | US | 2003045203 A1 | 06-03-2003 |
| | | US | 2006041332 A1 | 23-02-2006 |
| | | WO | 0139932 A1 | 07-06-2001 |
| US 2022297018 A1 | 22-09-2022 | JP | 7415989 B2 | 17-01-2024 |
| | | JP | 7525021 B2 | 30-07-2024 |
| | | JP | 2022142113 A | 30-09-2022 |
| | | JP | 2023155303 A | 20-10-2023 |
| | | JP | 2024127982 A | 20-09-2024 |
| | | US | 2022297018 A1 | 22-09-2022 |
| JP 2022142109 A | 30-09-2022 | JP | 7314967 B2 | 26-07-2023 |
| | | JP | 2022142109 A | 30-09-2022 |
| | | JP | 2023115370 A | 18-08-2023 |

EPO FORM P0459

For more details about this annex : see Official Journal of the European Patent Office, No. 12/82

**EP 4 487 931 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003285286 A